**Europäisches Patentamt**

(19) **European Patent Office**

**Office européen des brevets**

(11) Veröffentlichungsnummer: **0 089 552**

**A2**

(12) # EUROPÄISCHE PATENTANMELDUNG

(21) Anmeldenummer: **83102317.1**

(22) Anmeldetag: **09.03.83**

(51) Int. Cl.³: **C 09 K 3/34**
 **G 02 F 1/137**

(30) Priorität: **24.03.82 DE 3210852**

(43) Veröffentlichungstag der Anmeldung:
 **28.09.83 Patentblatt 83/39**

(84) Benannte Vertragsstaaten:
 **DE FR GB IT**

(71) Anmelder: **SIEMENS AKTIENGESELLSCHAFT**
 **Berlin und München Wittelsbacherplatz 2**
 **D-8000 München 2(DE)**

(72) Erfinder: **Bernhardt, Jörg, Dr.**
 **Althoffstrasse 20**
 **D-1000 Berlin 41(DE)**

(72) Erfinder: **Kohlmüller, Hans**
 **Friedrich-Bauer-Strasse 5**
 **D-8520 Erlangen(DE)**

(54) **Flüssigkristallanzeige.**

(57) Die Erfindung betrifft eine Feldeffekt-Flüssigkristallanzeige und stellt sich die Aufgabe, eine derartige Anzeige in der Weise auszugestalten, daß ein Gleichspannungsbetrieb ermöglicht wird und eine Vereinfachung im Aufbau erreicht werden kann. Erfindungsgemäß ist dazu vorgesehen, daß die Flüssigkristalle einen Zusatz von 0,01 bis 1 Gew.-% einer nicht-ionogenen, reversibel oxidierbaren oder reduzierbaren Substanz aufweisen, deren Oxidation bzw. Reduktion in einem Potentialbereich erfolgt, der innerhalb der Potentialbereiche für die Oxidation und Reduktion der Flüssigkristalle bzw. der Elektroden liegt. Das erfindungsgemäße Display eignet sich insbesondere auch für Multiplexanzeigen.

EP 0 089 552 A2

SIEMENS AKTIENGESELLSCHAFT     Unser Zeichen
Berlin und München     VPA 82 P 3 0 8 4 E

## Flüssigkristallanzeige

Die Erfindung betrifft eine Feldeffekt-Flüssigkristallanzeige.

Flüssigkristallanzeigen oder -displays (LCD) sind
Anordnungen, bei denen sich zwischen zwei Elektroden,
die insbesondere aus Zinn- oder Indiumoxid bestehen,
Flüssigkristalle befinden. In derartigen Systemen,
welche elektrochemische Zellen darstellen, werden für
die elektrooptische Anzeige sowohl hydrodynamische als
auch Feldeffekte herangezogen.

Bei Flüssigkristallanzeigen, die (elektro-)hydrodynamische Effekte ausnutzen, beispielsweise die sogenannten
dynamisch streuenden Zellen, ist ein Stromfluß über die
Zelle erforderlich. Zur Aufrechterhaltung dieses Stromes
werden den Flüssigkristallen Leitsalze, wie Tetrabutylammoniumpikrat, zugesetzt. Dynamisch streuende Zellen
werden im allgemeinen mit Wechselstrom betrieben, es
ist aber auch ein Gleichstrombetrieb möglich.

Feldeffekt-Flüssigkristallanzeigen sind dadurch gekennzeichnet, daß bei ihnen für den Schaltvorgang kein
Stromfluß notwendig ist, d.h. die elektrooptische
Anzeige erfordert keinen Strom, sondern nur ein elektrisches Feld. Derartige Systeme, wie TN-Zellen
("twisted nematic"), d.h. nematische Drehzellen, und
Farbstoffzellen ("Guest-Host"-Zellen), haben aber den
Nachteil, daß sie nur mit Wechselspannung angesteuert
werden können, wenn das elektrische Feld aufrechter-

Bh 2 Koe / 18.3.1982

halten werden soll, ohne daß gleichzeitig ein Faradaystrom in Kauf genommen werden muß.

Beim Betrieb von Feldeffekt-Flüssigkristallanzeigen mit
Gleichspannung oder auch mit niederfrequenter Wechselspannung treten irreversible elektrochemische Reaktionen
der Flüssigkristalle auf, die die Lebensdauer der Displays begrenzen und somit die Einsatzfähigkeit von
nematischen Drehzellen und Farbstoffzellen verringern.
Bei nematischen Drehzellen machen sich diese elektrochemischen Reaktionen unter anderem in einer Dimerisierung und Polymerisierung der Flüssigkristalle bemerkbar,
bei Farbstoffzellen bewirken sie eine oxidative oder
reduktive Zerstörung des Farbstoffes.

Zur Reduzierung der elektrochemischen Reaktionen, die
von Gleichspannungsanteilen bewirkt werden, und somit
zur Erhöhung der Lebensdauer der Displays ist versucht
worden, den diese Reaktionen verursachenden Strom durch
Erhöhung des ohmschen Widerstandes zu verringern. Dazu
sind aber extrem reine Flüssigkristalle erforderlich,
was zu einer spürbaren Verteuerung der Anzeigen führt.
Außerdem wurde bereits versucht, die Zellen mit symmetrischem Wechselstrom anzusteuern; dabei wird die
Frequenz des Wechselstromes so hoch gewählt, daß der
über die Zelle fließende Strom durch die Doppelschichtkapazität der Elektroden aufgefangen wird. Der Nachteil
dieser Methode ist, daß bei der Verwendung symmetrischen Wechselstromes kompliziert aufgebaute Schaltkreise
erforderlich sind. Ferner hat sich gezeigt, daß die
Verwendung von dünnen isolierenden Schichten auf den
Elektroden zur Reduzierung der Elektrodenreaktionen
beitragen kann. Aber auch dies ist eine relativ aufwendige Maßnahme.

Aufgabe der Erfindung ist es, eine Feldeffekt-Flüssigkristallanzeige derart auszugestalten, daß ein Gleichspannungsbetrieb ermöglicht wird und somit eine Vereinfachung im Aufbau des Displays erreicht werden kann.

Dies wird erfindungsgemäß dadurch erreicht, daß die Flüssigkristalle einen Zusatz von 0,01 bis 1 Gew.-% einer nicht ionogenen, reversibel oxidierbaren oder reduzierbaren Substanz aufweisen, deren Oxidation bzw. Reduktion in einem Potentialbereich erfolgt, der innerhalb der Potentialbereiche für die Oxidation und Reduktion der Flüssigkristalle bzw. der Elektroden liegt.

Dies bedeutet mit anderen Worten, daß ein Zusatz verwendet wird, dessen Redoxpotential (Oxidations-Reduktions-Potential) unterhalb des Potentials liegt, bei dem die Flüssigkristalle bzw. die Elektroden durch Oxidation geschädigt werden, und oberhalb des Potentials, bei dem die Flüssigkristalle bzw. die Elektroden durch Reduktion geschädigt werden.

Bei Gleichstrombetrieb (oder auch bei asymmetrischer Wechselstromansteuerung) erfolgen bei Displays, wie bereits ausgeführt, irreversible elektrochemische Prozesse, d.h. an der einen Elektrode treten Oxidationsreaktionen und an der anderen Elektrode Reduktionsreaktionen auf. Zur Vermeidung dieser irreversiblen Prozesse, die die Lebensdauer der Displays begrenzen, dienen nun erfindungsgemäß reversible Vorgänge, d.h. dem Flüssigkristall wird eine oxidierbare oder eine reduzierbare Verbindung zugesetzt. Derartige Verbindungen sind beispielsweise aromatische Amine und Nitroverbindungen, Chinone und Hydrochinone, Aminophenole, Tetracyanoäthylen und Dibutylferrocen; als Nitroverbindungen kommen beispielsweise Dinitrobenzole in Betracht, geeignete Chinone sind beispielsweise
o-Benzochinon, Diphenochinon, $\alpha$- und $\beta$-Naphthochinon
sowie Anthrachinon. Diese Verbindungen sollen farblos,
allenfalls schwach gefärbt sein, d.h. sie sollen keine
Farbstoffeigenschaften besitzen.

Es wurde zwar bereits vorgeschlagen, in Feldeffekt-
Flüssigkristallanzeigen den Flüssigkristallen einen
oxidierbaren bzw. reduzierbaren Elektronen-Donor-
Akzeptor-Komplex zuzusetzen (vgl.: deutsche Patentanmeldung Akt.Z. P 30 42 517.3 - VPA 80 P 7580 DE,
"Flüssigkristallanzeige"). Die Zahl der für diesen
Zweck zur Verfügung stehenden Komplexe ist aber
beschränkt, und darüber hinaus erfordern diese Komplexe
jeweils zwei Ausgangsverbindungen unterschiedlicher
Struktur, d.h. einen Elektronen-Donor und einen
Elektronen-Akzeptor.

Es hat sich nun überraschenderweise gezeigt, daß es
bereits ausreichend ist, den Flüssigkristallen eine
einzige Verbindung zuzusetzen, nämlich eine oxidierbare
oder eine reduzierbare Substanz. Die dabei im Vergleich
zu einem Elektronen-Donor-Akzeptor-Komplex fehlende
Komponente wird offensichtlich - infolge von elektrochemischen Reaktionen - während des Gleichstrombetriebs
des Displays gebildet, d.h. es entsteht ein Redoxsystem. Bei dieser Komponente muß es sich nicht um
eine beständige, präparativ isolierbare Substanz
handeln, sondern es können auch Verbindungen sein, die
nur in verdünnter, gelöster Form für eine gewisse Zeit
stabil sind, wie Radikale. Allerdings gilt auch für
diese Verbindungen die Bedingung hinsichtlich des
Potentialbereichs, in dem die Umsetzung erfolgen muß.

Der Zusatz in der erfindungsgemäßen Flüssigkristallanzeige ist vorteilhaft im Molekülaufbau den Flüssigkristallen ähnlich. Dies gilt beispielsweise für
Diphenochinon, im Vergleich mit Flüssigkristallen auf
der Basis von Biphenyl. Diese Eigenschaft hat den
Vorteil, daß der Ordnungsgrad der Flüssigkristalle
nur wenig beeinflußt wird.

Besonders vorteilhaft ist es, wenn die dem Display
zugesetzte oxidierbare bzw. reduzierbare Substanz selbst
flüssigkristalline Eigenschaften aufweist, d.h. als
Flüssigkristall dienen kann. Hierbei ergeben sich dann
ebenfalls die vorstehend genannten Vorteile, und zwar
in Bezug auf den Vorschlag, in Displays Flüssigkristallkomponenten mit Elektronen-Donor-Akzeptor-
Eigenschaften einzusetzen (vgl.: deutsche Patentanmeldung Akt.Z. P 31 25 758.5 - VPA 81 P 7540 DE,
"Flüssigkristallanzeige").

Der Potentialbereich für die Oxidation bzw. Reduktion
der Zusätze (und der elektrochemisch gebildeten Verbindungen) liegt vorzugsweise weit innerhalb des entsprechenden Potentialbereichs der Flüssigkristalle. Die
Zusätze weisen außerdem keinen ionogenen Charakter auf
und zwar deshalb, damit die niedrige Leitfähigkeit der
Flüssigkristalle nicht erhöht wird.

Die Bedingung für die dem erfindungsgemäßen Display
zugesetzten Substanzen, daß ihre Oxidation bzw. Reduktion in einem Potentialbereich erfolgt, der innerhalb
des Potentialbereichs liegt, in welchem die Flüssigkristalle (bzw. die Elektroden) in entsprechender Weise
elektrochemisch umgesetzt werden, wird auf verschiedene
Weise erfüllt.

Da die Zusätze - bei einer vorgegebenen Überspannung - schneller reagieren müssen als die Flüssigkristalle, werden sie so gewählt, daß die Überspannung $\varepsilon - \varepsilon_o$ für das Redoxsystem günstiger liegt als für den Flüssig- kristall. Dann gilt:

$$i = i_o \, \Theta \, \exp (\varepsilon - \varepsilon_o^Z) \cdot \alpha z F/RT$$

Dabei ist: $i$ = Stromdichte bzw. Umsatzrate

$i_o$ = Austauschstromdichte

$\Theta$ = Bedeckungs- bzw. Belegungsgrad des Zusatzes auf der Elektrodenoberfläche

$\varepsilon$ = Elektrodenpotential

$\varepsilon_o^Z$ = Ruhepotential Elektrode/Zusatz

$\alpha$ = Durchtrittsfaktor

$z$ = Ladungsaustausch

$F$ = Faradaykonstante

$R$ = Gaskonstante

$T$ = Temperatur.

Der vorstehend angegebenen Gleichung läßt sich folgendes entnehmen:

1. Da die Umsatzrate $i$ von der Austauschstromdichte $i_o$ abhängig ist, wird man Zusätze verwenden, die elektrochemisch gut umgesetzt werden, d.h. mit hoher Geschwindigkeit reagieren; dann ist nämlich auch die Austauschstromdichte groß.

2. Für eine hohe Umsatzrate $i$ ist ferner ein hoher Bedeckungsgrad $\Theta$ erforderlich, d.h. die Zusätze müssen an der Elektrode adsorbiert werden. Ein hoher Bedeckungsgrad des Zusatzes verhindert bzw. erschwert aber die elektrochemische Umsetzung der Flüssigkristalle, da für deren Umsetzung folgendes gilt:

$$i = i_o (1 - \theta) \exp (\mathcal{E} - \mathcal{E}_o^{LC}) \cdot \alpha zF/RT,$$

wobei $\mathcal{E}_o^{LC}$ = Ruhepotential Elektrode/Flüssigkristall. Für die Auswahl der Zusätze gilt deshalb, daß sie an der Elektrode besser adsorbiert werden müssen, als die Flüssigkristalle selbst.

Durch den Zusatz von Substanzen zu den Flüssigkristallen, die reversibel oxidiert bzw. reduziert werden können, wird bei den erfindungsgemäßen Displays erreicht, daß der aus der Ansteuerspannung und dem ohmschen Widerstand resultierende Strom nicht zu einer elektrochemischen Reaktion der Flüssigkristalle, d.h. zu einer irreversiblen Umsetzung, führt. Vielmehr treten die Zusätze an die Stelle der Flüssigkristalle und unterliegen dabei einer reversiblen Reaktion. Durch die Zusätze kann somit die Lebensdauer von Feldeffekt-Flüssigkristallanzeigen, wie nematischen Drehzellen und Farbstoffzellen, verbessert werden. Im übrigen können dabei alle bislang verwendeten nematischen Flüssigkristalle eingesetzt werden.

Neben einer verbesserten Lebensdauer weisen die erfindungsgemäßen Feldeffekt-Flüssigkristallanzeigen auch eine verringerte Gleichspannungsempfindlichkeit auf. Normalerweise werden die Displays nämlich mit einer Rechteckspannung angesteuert, deren Gleichstromanteil sehr gering sein muß. Dies wiederum stellt hohe Anforderungen an die dabei verwendeten integrierten Schaltungen. Bei den erfindungsgemäßen Anzeigen kann aber ein größerer Gleichstromanteil toleriert werden und es können sogar Displays für Gleichstromansteuerung (DC) aufgebaut werden.

Eine DC-Ansteuerung hat eine hohe wirtschaftliche Bedeutung, da hiermit der Aufbau billiger und einfacher Displays möglich ist, die keine komplizierten integrierten Schaltungen zur Ansteuerung benötigen. Eine gleichspannungsfeste Anzeige (DC-Display) stellt darüber hinaus auch beim Betrieb mit Wechselstrom keine hohen Anforderungen an die Symmetrie der Ansteuerspannung. Bei den erfindungsgemäßen Flüssigkristallanzeigen können deshalb die bisher strengen Anforderungen in Bezug auf die Gleichspannungskomponente gelockert werden.

Ein wesentlicher Vorteil von DC-Displays liegt ferner in der Anwendung bei Multiplexanzeigen. Bei derartigen Anzeigen wird eine steile Schaltkennlinie des Flüssigkristalls gefordert, um ein Übersprechen auf Nachbarzellen zu vermeiden. Die geforderte Steilheit konnte bislang aber bei keinem Flüssigkristall in ausreichendem Maße erreicht werden. Mit den erfindungsgemäßen Anzeigen ergeben sich hierbei nun aber neue Möglichkeiten.

Ein weiterer Vorteil der erfindungsgemäßen Displays besteht darin, daß durch den Zusatz von oxidierbaren bzw. reduzierbaren Substanzen auch die Elektroden geschützt werden können. Die Elektroden, die im allgemeinen aus Indium- oder Zinnoxid bestehen, können nämlich ebenfalls einem elektrochemischen Angriff unterliegen und reduziert werden. Werden nun aber Verbindungen eingesetzt, deren Redoxpotential innerhalb des Potentialbereichs liegt, bei welchem die Elektroden üblicherweise angegriffen werden, so ergibt sich durch diesen Zusatz auch ein Schutz der Elektroden.

Anhand von Beispielen soll die Erfindung noch näher erläutert werden.

Ein Display mit nematischen Flüssigkristallen auf der Basis von Pyrimidin/Biphenyl zeigt eine instabile Kontrastkennlinie. Beim Gleichstrombetrieb fließt über das Display ein Strom, der von der Leitfähigkeit des Flüssigkristalls begrenzt wird. Bei diesem Strom handelt es sich in den Elektroden um einen Elektronenstrom und im Flüssigkristall um einen Ionenstrom. Die Umwandlung der beiden Ströme erfolgt in einer Durchtrittsreaktion des Flüssigkristalls an der Grenzfläche Flüssigkristall/Elektrode. Diese Reaktion verläuft aber sehr langsam. Zum Erreichen der durch den Strom bedingten Reaktionsgeschwindigkeit ist eine hohe Überspannung erforderlich. Diese hohe Überspannung führt nun aber an der Elektrode zu einer Polarisation, die sich in einer Verschiebung der Kontrastkennlinie (zu höheren Spannungen) bemerkbar macht.

Wird nun dem Display eine reduzierbare Substanz zugesetzt, beispielsweise 0,01 bis 0,2 Gew.-% 1.4-Dinitrobenzol, bezogen auf den Flüssigkristall, so führt dies zu einer Stabilisierung der Kontrastkennlinie. In Gegenwart des Zusatzes (und des in der Zelle gebildeten Reduktionsproduktes) erfolgt nämlich der Ladungsdurchtritt, d.h. der Übergang des Elektronenin den Ionenstrom, nicht mehr in der langsam ablaufenden Reaktion des Flüssigkristalls, sondern in der schnelleren Reaktion des Redoxsystems. Diese Reaktion erfordert aber keine hohe Überspannung. Es kommt somit zu keiner nennenswerten Polarisation und es tritt auch keine (wesentliche) Verschiebung der Kontrastkennlinie auf. Durch die geringe Polarisation wird aber auch verhindert, daß der Flüssigkristall, der nur bei hohen Überspannungen umgesetzt werden kann, elektrochemisch reagiert.

Die Vorteile einer stabilen Kontrastkennlinie, die sich aufgrund der Ausschaltung der Polarisation und damit der Vermeidung von Reaktionen des Flüssigkristalls ergeben, sind insbesondere in folgendem zu sehen:

1. Beim Multiplexbetrieb muß die Ansteuerspannung mit einer definierten Stelle der Kontrastkennlinie übereinstimmen; es ist hierbei deshalb eine stabile Kennlinie erforderlich.

2. Eine vorhandene Polarisation kann zunächst auch nach dem Abschalten des Stromes bestehen bleiben und erst langsam abgebaut werden, wie dies beispielsweise bei der Konzentrationspolarisation der Fall ist. Diese Polarisation könnte beim Abschalten des Displays, d.h. beim Kurzschließen der beiden Elektroden, zu einer nicht erwünschten Ansteuerung führen.

3. Bei einer Reaktion des Flüssigkristalls können Produkte entstehen, die zu Orientierungsstörungen und zu einer Korrosion der Elektrode führen. Durch den Zusatz von oxidierbaren bzw. reduzierbaren Substanzen wird eine derartige Reaktion aber verhindert.

Es hat sich gezeigt, daß beispielsweise bei Displays mit Pyrimidin/Biphenyl-Flüssigkristallen bei Gleichspannungsbetrieb (Spannung: 5 V) bereits nach 100 bis 200 Stunden eine braune Verfärbung eintritt. Verwendet man dagegen eine erfindungsgemäße Flüssigkristallanzeige, so läßt sich eine derartige Verfärbung, beispielsweise bereits bei einem Zusatz von 0,05 bis 0,2 Gew.-% Dinitrobenzol, über sehr lange Zeiträume hinweg verhindern. Im übrigen beträgt bei den erfindungsgemäßen Anzeigen die Lebensdauer, die sonst bei ca. 100 Stunden liegt, etwa 1300 Stunden.

5 Patentansprüche

Patentansprüche

1. Feldeffekt-Flüssigkristallanzeige, d a d u r c h g e k e n n z e i c h n e t , daß die Flüssigkristalle einen Zusatz von 0,01 bis 1 Gew.-% einer nicht-ionogenen, reversibel oxidierbaren oder reduzierbaren Substanz aufweisen, deren Oxidation bzw. Reduktion in einem Potentialbereich erfolgt, der innerhalb der Potentialbereiche für die Oxidation und Reduktion der Flüssigkristalle bzw. der Elektroden liegt.

2. Feldeffekt-Flüssigkristallanzeige nach Anspruch 1, d a d u r c h g e k e n n z e i c h n e t , daß der Zusatz Dinitrobenzol ist.

3. Feldeffekt-Flüssigkristallanzeige nach Anspruch 1, d a d u r c h g e k e n n z e i c h n e t , daß der Zusatz Anthrachinon ist.

4. Feldeffekt-Flüssigkristallanzeige nach Anspruch 1, d a d u r c h g e k e n n z e i c h n e t , daß der Zusatz im Molekülaufbau den Flüssigkristallen ähnlich ist.

5. Feldeffekt-Flüssigkristallanzeige nach Anspruch 1, d a d u r c h g e k e n n z e i c h n e t , daß der Zusatz flüssigkristalline Eigenschaften aufweist.